Europäisches Patentamt

European Patent Office

Office européen des brevets

(19)

(11) EP 0 748 294 B1

# (12) FASCICULE DE BREVET EUROPEEN

(45) Date de publication et mention
de la délivrance du brevet:
**18.08.1999 Bulletin 1999/33**

(21) Numéro de dépôt: **95943250.1**

(22) Date de dépôt: **20.12.1995**

(51) Int Cl.$^6$: **C01F 7/47**

(86) Numéro de dépôt international:
**PCT/FR95/01703**

(87) Numéro de publication internationale:
**WO 96/19410 (27.06.1996 Gazette 1996/29)**

(54) **PROCEDE D'ELIMINATION DU FER DANS LES LIQUEURS D'ALUMINATE DE SODIUM ISSUES DE L'ATTAQUE ALCALINE DE BAUXITE A MONOHYDRATE D'ALUMINE (METAHYDROXIDE D'ALUMINIUM)**

VERFAHREN ZUR ENTFERNUNG VON EISEN AUS NATRIUMALUMINATLAUGEN, DIE AUS DEM ALKALISCHEN ANGRIFF VON ALUMINIUM-METAHYDROXID ENTHALTENDEM BAUXIT STAMMEN

PROCESS FOR REMOVING IRON IN SODIUM ALUMINATE LIQUORS OBTAINED FROM ALKALINE ATTACK OF BAUXITE CONTAINING ALUMINA MONOHYDRATE (ALUMINUM METAHYDROXIDE)

(84) Etats contractants désignés:
**DE ES FR GB GR IE IT**

(30) Priorité: **22.12.1994 FR 9415727**

(43) Date de publication de la demande:
**18.12.1996 Bulletin 1996/51**

(73) Titulaire: **ALUMINIUM PECHINEY**
**92400 Courbevoie (FR)**

(72) Inventeurs:
• **DEVILLE, Jean**
**F-13090 Aix-en-Provence (FR)**

• **LAMERANT, Jean-Michel**
**F-13320 Bouc-Bel-Air (FR)**

(74) Mandataire: **Mougeot, Jean-Claude et al**
**PECHINEY**
**28, rue de Bonnel**
**69433 Lyon Cedex 03 (FR)**

(56) Documents cités:
**EP-A- 0 188 268          FR-A- 2 546 872**
**US-A- 3 796 789**

# EP 0 748 294 B1

**Description**

<u>DOMAINE TECHNIQUE</u>

L'invention concerne un procédé d'élimination du fer dans la liqueur d'aluminate de sodium sursaturée issue de l'attaque alcaline selon le procédé Bayer de bauxite contenant du monohydrate d'alumine.

<u>ETAT DE LA TECHNIQUE</u>

Le procédé Bayer largement décrit dans la littérature spécialisée constitue la technique essentielle de production d'alumine destinée à être transformée en aluminium par électrolyse ignée ou à être ucilisée à l'état d'hydrate, d'alumine de transition, d'alumine calcinée, d'alumine frittée ou fondue, dans les nombreuses applications relevant du domaine des alumines techniques.

Selon ce procédé, le minerai de bauxite est traité à chaud au moyen d'une solution aqueuse d'hydroxyde de sodium à concentration appropriée, ou liqueur d'attaque, provoquant ainsi la solubilisation de l'alumine et l'obtention d'une solution sursaturée d'aluminate de sodium.

Après séparation de la phase solide constituant le résidu inattaqué (boues rouges) du minerai, la solution sursaturée d'aluminate de sodium est ensemencée avec des particules de trihydrate d'alumine dans le but de provoquer la précipitation de l'alumine sous forme de trihydrate d'alumine. La liqueur d'aluminate de sodium appauvrie en alumine, dite liqueur décomposée, est recyclée à l'étape de l'attaque après avoir été éventuellement concentrée et rechargée en hydroxyde de sodium pour constituer la liqueur d'attaque.

Il est bien connu de l'homme de métier que les conditions de traitement doivent être adaptées selon le degré d'hydratation et la structure criscallographique de l'alumine ainsi que la nature et la teneur des impuretés présentes dans la bauxite. C'est ainsi que les bauxites contenant de l'alumine à l'état de monohydrate (boehmite, diaspore) sont traitées à des températures supérieures à 200°C, et généralement comprises entre 220 et 300°C avec des rendements d'extraction de l'alumine solubilisable pouvant dépasser 95%. En outre l'emploi de liqueur d'attaque à forte concentration en hydroxyde de sodium, ou soude caustique, généralement comprise entre 130 et 180 g $Na_2O$/litre permet une dissolution rapide de l'alumine solubilisable dans un faible volume de liqueur. Celà se traduit donc par une productivité élevée de la liqueur sursaturée, c'est-à-dire une capacité de produire, après précipitation en présence d'amorce et refroidissement, au minimum 80 kg d'alumine par m3 de liqueur sursaturée à décomposer. Cette productivité est mesurée habituellement par le produit de la concentration C en soude caustique exprimée en g. $Na_2O$/litre par la variation $\Delta Rp$ du rapport Rp des concentrations $Al_2O_3$ soluble en g/litre / $Na_2O$ caust g/litre entre le début de décomposition (avec de préférence 1 < Rp < 1,25) et la fin de décomposition (avec de préférence 0,5 < Rp < 0,7).

Ces conditions d'attaque relativement sévères ont pour corollaire de favoriser le passage en solution de certaines impuretés et en particulier du fer présent dans la bauxite sous forme oxydée comme l'hématite, la goethite voire la magnétite et l'ilménite. Ce fer peut être partiellement solubilisé selon des processus mal connus à l'état de complexes solubles tel que l'ion ferrate Fe $(OH)_4^-$ mais surtout il peut être précipité à l'état colloïdal sous forme de particules d'hydroxyde très fines (0,1 à 3 micromètres) qui ne peuvent être arrêtées lors des filtrations polluant ainsi la liqueur sursaturée d'aluminate de sodium et par suite le trihydrate d'alumine précipité lors de la décomposition de la liqueur.

Parmi les procédés connus d'élimination du fer dans les liqueurs Bayer, peu d'entre eux apportent une solution satisfaisante au problème de la contamination de l'alumine par le fer présent dans la bauxite surtout si l'on désire assurer une teneur en fer dans $Al_2O_3$ à l'état de trihydrate d'alumine qui soit inférieure à 0,01%, considérée aujourd'hui comme la teneur maximale admissible pour la plupart des applications de l'alumine notamment dans le domaine des alumines techniques. Sur le plan pratique, celà implique pour l'homme de métier que la teneur en fer dans la liqueur d'aluminate de sodium sursaturée soit inférieure à 10 mg Fe par litre.

Une première catégorie de procédé fait appel à des techniques de filtration de la liqueur sursaturée avant décomposition plus sélective mais ces procédés sont quasiment impossibles à mettre en oeuvre industriellement comme la filtration sur lit de sable ou de bauxite selon US 3792542 et US 3728432 ou sur filtre spécial en papier selon US 4446177.

Plus simples à réaliser industriellement sont les méthodes faisant appel à des additifs destinés à faciliter l'agglomération des particules colloïdales d'hydroxyde de fer et de silice et par suite la décantation et la filtration des boues rouges. Parmi ces additifs il faut citer les agents floculants de synthèse tels les polyélectrolytes anioniques à poids moléculaire élevé à base généralement de polyacrylates introduits de préférence en début d'étape de décantation (US 3390959, US 3681012 ou US 3975496).

Il faut citer également des additifs minéraux comme la chaux. Celle-ci est utilisée souvent comme additif avant attaque alcaline de la bauxite pour favoriser la dissolution des petites quantités de sodium et d'alumine combinées à l'origine dans la bauxite sous forme de sels ou d'oxydes complexes insolubles avec des impuretés telles que la silice, les oxydes de fer, de titane ou de vanadium.

La chaux peut être aussi introduite avant décantation de la suspension, issue de l'attaque alcaline à haute température de la bauxite et refroidie au voisinage de 100°C par détentes successives jusqu'à la pression atmosphérique. Ceci dans le but d'accélérer la décantation des boues rouges et de faciliter la séparation de certaines impuretés comme le fer. C'est ce que préconise US 3796789 pour abaisser à moins de 10 mg par litre la teneur en fer des liqueurs d'aluminate de sodium notamment celles provenant de la lixiviation du mélange fritté de carbonate de sodium et de résidu insoluble provenant d'une première attaque alcaline de la bauxite (procédé sinter). Ce document ne précise pas en revanche les performances de "déferrage" que l'on peut réaliser dans le cas d'une liqueur issue directement de l'attaque alcaline de la bauxite qui demeure pourtant le problème majeur a résoudre.

Au cours de ses différentes expérimentations la demanderesse a pu constater que les méthodes faisant appel à ces différents additifs permettaient d'abaisser parfois sensiblement la teneur en fer de la liqueur sursaturée issue de l'attaque alcaline de bauxite mais en aucun cas de garantir une teneur inférieure à 10 mg Fe/litre et celà quelle que soit l'origine de la bauxite.

Ce résultat est atteint en revanche avec les types de procédé préconisant au moins une opération complémentaire et spécifique d'élimination des impuretés présentes à l'état d'hydroxyde colloîdal ou sous forme de complexe métastables plus ou moins solubles comme le fer. Ainsi US 3607140 et EP 0231715 (équivalent à US 4732742) effectuent avant décomposition, une prédécomposition de la liqueur sursaturée en présence d'une très faible quantité d'amorce au cours de laquelle les impuretés et tout particulièrement le fer coprécipitent avec la fraction de trihydrate d'alumine qui est sacrifiée comme piège à impuretés. Pour efficaces qu'ils soient, ces procédés renchérissent les coûts de production en diminuant très sensiblement la productivité de la liqueur et en prolongeant notablement les temps de séjour dans les chaines de décomposition.

PROBLEME POSE

La mise au point d'un procédé d'épuration du fer dans les liqueurs sursaturées d'aluminate de sodium avant décomposition jusqu'à une teneur inférieure à 10 mg Fe par litre, sans altération des conditions économiques de production, notamment de la productivité de la liqueur et du rendement d'extraction de l'alumine solubilisable, demeure un objectif prioritaire pour l'homme de métier.

OBJET DE L'INVENTION

L'invention repose sur le constat qu'une injection de chaux effectuée en fin d'attaque à haute température de la bauxite, très précisément au début du refroidissement de la suspension qui s'effectue par détente progressive des réacteurs sous pression, est beaucoup plus efficace pour abaisser la teneur en fer dans la liqueur sursaturée que tous les autres type d'ajouts et en particulier les ajouts de chaux avant attaque ou après attaque dans la suspension refroidie après détente jusqu'à la pression atmosphérique.

Plus précisément, l'invention concerne un procédé d'élimination du fer dans les solutions d'aluminate de sodium sursaturée issues de l'attaque alcaline selon le procédé Bayer de bauxite à monohydrate comportant successivement les étapes de broyage et éventuellement de dessilicatation en présence d'une aliquote de liqueur décomposée, puis d'attaque à une température supérieure à 200°C, généralement comprise entre 240 et 270°C, de ladite bauxite broyée et éventuellement dessilicatée par la fraction restante de la liqueur décomposee, pour solubiliser l'hydrate d'alumine et former en fin d'attaque une suspension du résidu insoluble ou boues rouges dans de la liqueur sursaturée d'aluminate de sodium qui, après refroidissement et dilution, est décantée pour séparer les boues ou résidu insoluble de la liqueur sursaturée destinée après filtration à être décomposée en présence d'amorce caractérisé en ce qu'en fin d'attaque, au cours du refroidissement de la suspension par abaissement progressif de la pression dans les réacteurs, on injecte dans ladite suspension a une température supérieure à 140°C une petite quantité d'un composé contenant du calcium.

La température de la suspension lors de l'injection du composé contenant du calcium doit être de préférence comprise entre 170°C et 220°C.

Par composé contenant du calcium il faut comprendre, outre la chaux, les sels de calcium, tels le carbonate de calcium ou le sulfate de calcium, mais aussi les produits formés par extinction de chaux dans une liqueur d'aluminate alcalin, comme par exemple l'aluminate tricalcique hexahydraté $Al_2O_3, 3CaO, 6H_2O$. Les petites quantités de composé à base de calcium, exprimées en poids de CaO par rapport au poids de bauxite sèche attaquée, sont comprises entre 0,5 et 3% et de préférence entre 1 et 2%.

Pour accélérer l'insolubilisation et la précipitation du fer, on effectue l'attaque de la bauxite broyée et éventuellement dessilicatée en présence d'une petite fraction des boues décantées recyclées en tête de procédé. Cette petite fraction des boues décantées mesurée par le rapport pondéral des boues sèches à la bauxite sèche est d'au moins 5% et de préférence compris entre 10 et 18%.

Pour améliorer le rendement d'extraction de l'alumine solubilisable, on introduit dans la bauxite avant attaque et de préférence à l'étape de broyage, une petite quantité de chaux, cette quantité de chaux étant limitée à 1 ou 2% en poids de CaO rapporté au poids de bauxite sèches.

DESCRIPTION

Il s'est aussi avéré de façon surprenante que selon le stade du traitement de la bauxite à monohydrate auquel on effectue l'injection de calcium, généralement sous forme de chaux, on obtient des résultats différents notamment en ce qui concerne l'insolubilisation et la précipitation du fer.

Ainsi lorsqu'on injecte la chaux dans la suspension formée par le minerai broyé et la liqueur d'attaque d'aluminate de sodium de Rp compris entre 0,5 et 0,7 et de concentration en soude caustique comprise entre 130 et 200 g $Na_2O$ / litre avant attaque, de préférence lors des opérations de broyage en milieu liquide, voire de dessilicatation, on enregistre une amélioration sensible des rendements d'extraction de l'alumine solubilisable. Cette amélioration s'explique notamment par une activation de la transformation de la goethite en hématite en présence de chaux avec libération d'alumine incorporée dans le réseau cristallin de la goethite. Des apports pondéraux de 3 à 6% de CaO par rapport au poids de bauxite sèche sont ainsi usuellement pratiqués, mais ils sont fonction avant tout de la nature et de la structure minéralogique des impuretés présentes dans la bauxite à monohydrate. A noter également qu'un excès de chaux provoque en revanche une baisse de rendement par réaction avec l'aluminate de sodium et précipitation d'aluminate tricalcique insoluble.

Ainsi, selon le tableau 1 ci-après, on enregistre avec des bauxites à monohydrate Africaine (Boké) un gain de rendement de l'ordre de 4 à 5%, toutefois on ne constate aucun abaissement significatif des teneurs en fer dans la liqueur d'aluminate de sodium sursaturée décantée et filtrée avant décomposition.

Considérant que le seuil d'arrêt pour les particules contenant notamment du fer est de l'ordre de 3 micromètres, on conserve des teneurs de 15 à 25 mg Fe/litre donc tout à fait rédhibitoires pour la production d'alumine de bonne pureté.

TABLEAU 1

| Série essais n° | CaO/bauxite % masse avant attaque | CaO/bauxite % masse fin attaque | CaO/bauxite % masse avant décantation | Fer mg/l liqueur sursaturée | Rendement % $Al_2O_3$ soluble |
|---|---|---|---|---|---|
| 1 | 0 | 0 | 0 | 15 à 25 | 91 à 93 |
| 2 | 3 | 0 | 0 | 15 à 25 | 95 à 96 |
| 3 | 5 | 0 | 0 | 15 à 20 | 96 à 97 |
| 4 | 8 | 0 | 0 | 15 à 20 | 94 à 95 |
| 5 | 2 | 1 | 0 | 8 à 10 | 96 à 97 |
| 6 | 1 | 2 | 0 | 7 à 9 | 95 à 96 |
| 7 | 0 | 3 | 0 | 8 à 10 | 92 à 94 |
| 8 | 0 | 0 | 3 | 13 à 18 | 91 à 93 |
| 9 | 1 | 0 | 2 | 15 à 20 | 92 à 94 |
| 10 | 2 | 0 | 1 | 15 à 20 | 95 à 96 |
| * - Température injection : 180°C Temps de contact à 180°C : 30 mn | | | | | |

On constate en revanche qu'un faible apport de CaO, de l'ordre de 1 à 2% en poids rapporté à la bauxite sèche, effectué en fin d'attaque au cours de la détente des réacteurs dans la suspension à une température comprise entre 140°C et 240°C, mais de préférence entre 170°C et 220°C, permet d'abaisser à moins de 10mg/litre la teneur en fer solubilisé ou à l'état colloîdal dans la liqueur. Il faut noter parallèlement que les rendements d'attaque ne sont pas dégradés si l'on effectue un apport de chaux de 1 à 2% seulement en début d'attaque ce qui en définitive conduit à limiter la consommation globale de chaux à 3 où 4% au maximum pour un rendement d'extraction équivalent et un taux d'épuration en fer bien meilleur, puisque de l'ordre de 10 mg/litre. Sur le plan industriel, ce constat est d'autant plus intéressant qu'il permet de découpler les effets de la chaux par le réglage séparé du rendement d'attaque au moyen de la chaux introduite avant attaque et de la teneur résiduelle en fer dans la liqueur au moyen de la chaux introduite à la détente.

Lors de ses essais, la demanderesse a pu constater, que les meilleurs résultats étaient obtenus pour des injections de chaux effectuées entre 170 et 220°C , en effet, au delà de 220°C on n'observe pas d'amélioration du déferrage, voire méme une dégradation au delà de 240°C, alors qu'en dessous de 170°C et surtout de 140°C la dégradation est très rapide. Comme le montre les essais d'injection de chaux au voisinage de 100°C la suspension étant alors à la pression atmosphérique avant son transfert dans les décanteurs, l'effet de déferrage est quasiment nul.

Pour atteindre de façon systématique des teneurs en fer inférieures à 10 mg/litre dans la liqueur avant décomposition, il convient, avec l'injection de 1 à 2 % de CaO (cf tableau 1) à la détente à une température comprise de préférence entre 170°C et 220°C, de maintenir en contact pendant un temps suffisant la chaux ou le composé contenant du calcium avec la suspension à cette température, L'est-à-dire au moins 15 minutes et de préférence 20 à 40 minutes.

A l'échelle industrielle, cette opération nécessite un contrôle prolongé et délicat de la cascade de détendeurs des réacteurs en fin d'attaque et augmente d'autant le temps total de séjour des produits dans la chaine d'attaque.

Pour cette raison, un objectif essentiel de la demanderesse a été de réduire au maximum les temps de séjour.

A cet effet, une première série d'essais visait à rendre le composé à base de chaux injecté le plus actif possible, c'est-à-dire à optimiser les caractéristiques et notamment la finesse et la dispersion des particules à base de chaux en suspension dans la liqueur injecté aux détendeurs.

- 3 sources possibles de chaux ont été étudiées :

    . chaux vive brute tamisée < 2 mm
    . chaux vive broyée et tamisée < 200 μm
    . carbonate de calcium < 2 mm (poids calculé en équivalent CaO)

- 4 liquides porteurs leur ont été combinés

    . liqueur d'attaque chaude (température 60 à 70°C)
    . liqueur d'attaque à température ambiante
    . Eaux de lavage à contre-courant des boues réchauffées à 60°C
    . Eaux de lavage à contre-courant des boues à température ambiante.

Il s'est avéré en définitive que les performances des différents laits de chaux chargés à environ 100 g CaO/litre sont similaires et que la granulométrie de la chaux vive ou du carbonate de calcium importe peu dès l'instant que l'affinement de la granulométrie des particules en suspension par attrition du fait de l'agitation est suffisant, c'est-à-dire que dans le cas présent que moins de 30% en poids des particules en suspension de lait de chaux ont une taille inférieure à 20 μm.

Le souci de minimiser les transformations nécessaires à l'application du procédé en usine conduit l'homme du métier à choisir de préférence l'extinction de la chaux brute tamisée seulement à 2 mm dans de la liqueur d'attaque entre 60 et 70°C.

En revanche, aucune diminution notable des temps de séjour n'ayant été constatée, une seconde série d'essais a été réalisée visant à activer la précipitation du fer par amorçage et celà, en combinant l'injection de chaux à la détente avec le recyclage en début d'attaque d'une petite fraction des boues décantées avec la bauxite broyée dessilicatée.

Lors d'essais préliminaires, la demanderesse a pu vérifier qu'isolément le recyclage d'une fraction des boues décantées favorise la séparation ultérieure des boues de la liqueur notamment au cours de décantation mais ne permet pas d'abaisser significativement la teneur en fer de la liqueur filtrée, qui reste nettement supérieure à 10 mg/litre. En revanche, une baisse très significative de la teneur en fer est constatée dès l'instant qu'on couple l'injection de chaux à la détente selon l'invention à l'opération de recyclage partiel des boues comme il ressort du tableau 2 ci-après. A noter de plus que cette baisse des teneurs résiduelles en fer s'accompagne d'une réduction importante des temps de séjour du composé contenant du calcium de 30 minutes en moyenne à 5 à 6 minutes.

TABLEAU 2

| Série essais n° | CaO bauxite % masse fin attaque détente | Temps séjour CaO minutes | % boues recyclées /bauxite % masse | Fe liq.sursat. |
|---|---|---|---|---|
| 11 | 0 | | 10 | 13 à 18 |
| 12 | 0 | | 15 | 12 à 15 |
| 13 | 0 | | 20 | 12 à 15 |
| 14 | 1 | 30 | 0 | 8 à 10 |
| 15 | 1 | 4 | 0 | 12 à 15 |
| 16 | 1 | 10 | 5 | 9 à 11 |
| 17 | 1 | 6 | 10 | 8 à 10 |
| 18 | 1 | 6 | 15 | 7 à 9 |
| 19 | 1 | 3 | 20 | 7 à 9 |
| * injection CaO à 180°C | | | | |

Ainsi l'effet d'amorce réalisé par les boues associé à l'apport de chaux à la détente, active la précipitation du fer et permet de réduire les temps de séjour à 10 minutes voire 3 minutes pour des taux de recyclage de boues variant de 5 à 20 %. A des taux de recyclage supérieurs à 20%, la cinétique de précipitation du fer n'est plus améliorée et la perte de capacité de traitement de bauxite commence à devenir sensible en exploitation industrielle.

De la méme façon que précédemment, les gains de rendement obtenus par injection de chaux avant attaque, au broyage par exemple, sont conservés quand on couple injection de chaux à la détente et recyclage partiel des boues à l'attaque comme il ressort du tableau 3 ci-après.

TABLEAU 3

| n°séries essais | CaO/Bauxite % masse Avant attaque | CaO/Bauxite % masse fin attaque détente | % boues recyclées /bauxite % masse | Fe mg/litre liq. sursat | Rendement Al2O3% |
|---|---|---|---|---|---|
| 20 | 2 | 0 | 0 | 15 à 25 | 96 à 97 |
| 21 | 2 | 1 | 0 | 12 à 15 | 96 à 97 |
| 22 | 2 | 1 | 5 | 10 à 12 | 96 à 97 |
| 23 | 1 | 1 | 10 | 8 à 10 | 95 à 96 |
| 24 | 2 | 1,5 | 10 | 7 à 9 | 96 à 97 |
| 25 | 1,5 | 1,5 | 12 | 7 à 9 | 96 à 97 |
| 26 | 1 | 1 | 18 | 7 à 9 | 95 à 96 |
| 27 | 2 | 0,5 | 20 | 9 à 11 | 96 à 97 |
| * Température d'injection de la chaux à la détente : 200°C Temps de séjour : 6 minutes | | | | | |

## EXEMPLE DE MISE EN OEUVRE

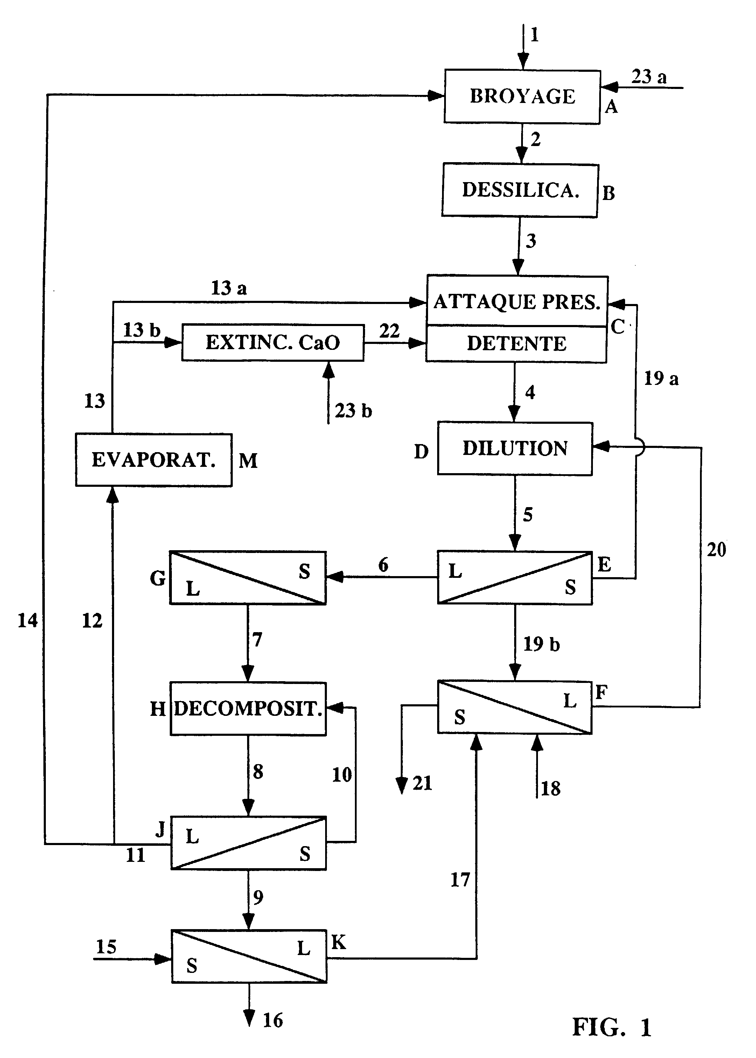

L'invention sera mieux comprise par la description détaillée de ses conditions préférentielles de mise en oeuvre industrielle en se référant à la figure 1 représentation schématique globale des étapes de traitement de la bauxite à monohydrate.

Selon la figure 1, la bauxite à monohydrate (boehmite, ou diaspore) est mise en contact avec une aliquote 14 de liqueur décomposée 11 d'aluminate de sodium dont le Rp est compris entre 0, 57 et 0,65 et la concentration en soude caustique comprise entre 150 et 160 g $Na_2O$ /litre à raison de 1600 à 1800 kg de minerai sec à traiter par m3 de liqueur. Simultanément un apport de chaux vive tamisée à 2 mm, correspondant à 1 à 2 % du poids de bauxite sèche est effectuée à ce mélange qui après broyage humide A forme une suspension épaisse 2 soumise, si nécessaire, à une dessilicatation par chauffage entre 90°C et 105°C pendant un temps suffisant, généralement compris entre 5 et 10 heures, pour solubiliser sous forme de silico-aluminate de sodium la silice réactive contenue dans la bauxite. La suspension 3 issue de dessilicatation est mise en contact avec une aliquote 13 a de liqueur d'attaque 13 dont le Rp est compris entre 0,57 et 0,65 et la concentration en soude caustique comprise entre 195 et 215 g $Na_2O$ /litre ainsi qu'avec une fraction 19a des boues décantées comprises de préférence à l'état sec entre 10 et 18% du poids de bauxite sèche. Le mélange ainsi obtenu est chauffe en réacteur entre 240 et 270°C pendant au moins 30 minutes et de préférence 1 à 2 heures avant début de refroidissement par abaissement progressif de la pression dans les réacteurs. Lorsque la température est comprise entre 220°C et 170°C, on injecte aux détendeurs à l'aide par exemple d'une pompe volumétrique haute pression du lait de chaux 22 de concentration en Ca O comprise de préférence entre 80 et 120g/litre et à raison de 1 à 2% en poids de CaO rapporté au poids initial de bauxite sèche.

A noter que ce lait de chaux est obtenu par mise en suspension d'un composé contenant du calcium 23b, de préférence de la chaux vive ou du carbonate de calcium, dans une aliquote 13b de liqueur d'attaque 13 et après un temps d'agitation suffisant (2 à 20 heures) pour obtenir un broyage efficace par attrition des particules en suspension, c'est-à-dire moins de 30% en poids de particules > 20 $\mu$m.

Le lait de chaux 22 injecté aux détendeurs est mélangé à la suspension maintenue pendant environ 6 minutes dans la plage de température 170-220°C, la suspension résultante 4 est refroidie ensuite jusqu'à environ 105°C et remise à la pression atmosphérique. Avec la liqueur 20 provenant du lavage à contre-courant F des boues et contenant moins de 100 g de $Na_2O$ /litre, on procède à la dilution D de la suspension 4 pour abaisser notamment sa concentration en soude caustique dans une plage plus adaptée à la bonne réalisation des opérations ultérieures de décantation E et de décomposition H.

Ainsi la suspension 5 résultant de l'étape dilution D, dont la température se situe entre 90°C et 105°C avec un rapport Rp compris entre 1,135 et 1,25 et une concentration en soude caustique comprise entre 150 et 160 g $Na_2O$/litre est mise en décantation E pour séparer de façon connue les boues rouges dont une fraction mineure 19a est recyclée au poste d'attaque C et la fraction restante en décharge 21 après lavage à contre-courant successivement par l'eau de lavage 17 du trihydrate d'alumine de production 16, puis à l'eau pure 18.

La liqueur 6 issue de décantation dont le Rp doit rester compris entre 1,13 et 1,23 subit une filtration de sécurité G en vue d'éliminer les fines particules de boue encore en suspension. Le filtrat clarifié 7 de liqueur sursaturée d'aluminate de sodium est décomposée H en présence d'amorce de trihydrate 10 recyclé selon l'art antérieur. Le trihydrate d'alumine en suspension 8 dans la liqueur décomposée est séparé par filtration J pour être en majeure partie (90% environ en poids) recyclé comme amorce 10 et en partie mineure 9 (10% environ) extrait pour la production 16 après lavage K à l'eau 15. Après prélèvement d'une aliquote 14 destinée au broyage humide et à la dessilicatation éventuelle de la bauxite, le reliquat 12 du filtrat 11 de liqueur décomposée d'aluminate de sodium, de Rp compris entre 0,57 et 0,65 et de concentration en soude caustique comprise entre 150 et 160 g $Na_2O$/litre, est concentré par évaporation M pour fournir la liqueur d'attaque 13 de la bauxite broyée et dessilicatée, dont les caractéristiques ont été déjà précisées.

## AVANTAGES DU PROCEDE

Selon le procédé de l'invention, on obtient après l'étape de filtration de sécurité G, une liqueur 7 d'aluminate de sodium sursaturée dont la teneur en fer est systématiquement inférieure à 10 mg/litre et généralement comprise entre 7 et 9 mg/litre et celà quelque soit l'origine de la bauxite à monohydrate traitée. Les teneurs en fer correspondantes du trihydrate d'alumine de production 16, précipité par décomposition H en présence d'amorce 10 à partir de cette liqueur 7, sont comprises après lavage K entre 30 et 80 ppm $Fe/Al_2O_3$, donc sytématiquement inférieures à la limite maximale de 0,01%.

Avec une plage de Rp avant décomposition de la liqueur 7 comprise entre 1,13 et 1,23 pour une concentration en soude caustique de l'ordre de 150 g $Na_2O$/litre et une plage de Rp après décomposition et filtration de la liqueur 11 comprise entre 0,57 et 0,65 pour une concentration en soude caustique de l'ordre de 150 g $Na_2O$/litre on conserve une productivité de la liqueur supérieure à 80 kg $Al_2O_3/m^3$.

Il en est de même pour les rendements d'extraction de l'alumine solubilisable qui restent compris entre 95 et 97% donc équivalents à ceux obtenus avec un unique apport de chaux avant attaque mais qui doit alors être plus conséquent (3 à 7% CaO % bauxite sèche à comparer aux 2 apports distincts du procédé selon l'invention qui au total n'excèdent pas 3%) et qui en aucune manière ne règle le problème de l'épuration du fer.

## Revendications

1.   Procédé d'élimination du fer dans les solutions d'aluminate de sodium sursaturée issues de l'attaque alcaline selon le procédé Bayer de bauxite à monhydrate d'alumine, comportant successivement les étapes de broyage, éventuellement de dessilicatation en présence d'une aliquote de liqueur décomposée, puis d'attaque à une température supérieure à 200°C, comprise généralement entre 240 et 270°C de ladite bauxite broyée et éventuellement dessilicatée par la fraction restante de la liqueur décomposée, pour solubiliser l'hydrate d'alumine et former en fin d'attaque une suspension du résidu insoluble ou boues rouges dans de la liqueur sursaturée d'aluminate de sodium qui, après refroidissement et dilution, est décantée pour séparer les boues ou résidu insoluble de la liqueur sursaturée destinée après filtration à être décomposée en présence d'amorce caractérisé en ce qu'en fin d'attaque, au cours du refroidissement de la suspension par abaissement progressif de la pression dans les réacteurs, on injecte dans ladite suspension à une température supérieure à 140°C une petite quantité d'un composé contenant du calcium.

2.   Procédé selon revendication 1 caractérisé en ce que la température d'injection du composé contenant du calcium est comprise entre 170°C et 220°C.

3.   Procédé selon la revendication 1 ou 2 caractérisé en ce que le composé contenant du calcium est de la chaux.

4.   Procédé selon la revendication 1 ou 2 caractérisé en ce que le composé contenant du calcium est un sel de calcium tel que carbonate de calcium ou sulfate de calcium.

5.   Procédé selon la revendication 1 ou 2 caraéctérisé en ce que le composé contenant du calcium est formé par extinction de chaux dans une liqueur d'aluminate alcalin tel que l'aluminate tricalcique hexahydraté.

6.   Procédé selon l'une quelconque des revendications 1 à 5 caractérisé en ce que les petites quantités du composé contenant du calcium injectées dans la suspension sont comprises entre 0,5 et 3%, et de préférence entre 1 et 2% en poids de CaO rapporté au poids de bauxite sèche.

7.   Procédé selon la revendication 1, caractérisé en ce que l'attaque de la bauxite est effectuée en présence d'une petite fraction des boues décantées recyclées en tête de procédé.

8.   Procédé selon la revendication 7, caractérisé en ce que la petite fraction des boues décantées recyclées en tête de procédé mesurée par le rapport pondéral des boues sèches à la bauxite sèche est d'au moins 5% et de préférence compris entre 10 et 18%.

9.   Procédé selon la revendication 1 caractérisé en ce qu'on introduit dans la bauxite avant attaque et de préférence à l'étape de broyage une petite quantité de chaux.

10.   Procédé selon la revendication 9 caractérisé en ce que la petite quantité de chaux introduite dans la bauxite avant attaque est comprise entre 1 et 2% en poids de CaO rapporté au poids de bauxite sèche.

11.   Procédé selon l'une quelconque des revendications 1 à 5, caractérisé en ce que le temps de séjour du composé contenant du calcium injecté dans la suspension entre 170° et 220°C est d'au moins 15 minutes et de préférence 20 à 40 minutes.

12.   Procédé selon l'une quelconque des revendications 1 à 6 caractérisé en ce que le composé à base de chaux est injecté sous forme de lait de chaux contenant de 80 à 120 g CaO/litre et dont moins de 30% en poids de particules en suspension ont une taille supérieure à 20 $\mu$m.

13.   Procédé selon la revendication 12 caractérisé en ce que le lait de chaux est obtenu par extinction de chaux brute tamisée à 2 mm dans de la liqueur d'attaque entre 60 et 70°C.

**14.** Procédé selon l'une des revendications 7 ou 8 caractérisé en ce que le temps de séjour du composé contenant du calcium injecté dans la suspension n'excède pas 10 minutes et est généralement compris entre 3 et 6 minutes.

**15.** Procédé selon la revendication 1 caractérisé en ce que la liqueur décomposée d'aluminante de sodium a un Rp compris entre 0,57 et 0,65 et une concentration en soude caustique comprise entre 150 et 160g $Na_2O$/litre.

**16.** Procédé selon la revendication 1 caractérisé en ce que la liqueur d'attaque après concentration par évaporation de la liqueur d'aluminate de sodium décomposée, a un Rp compris entre 0,57 et 0,65 et une concentration en soude caustique comprise entre 195 et 215g $Na_2O$/ litre.

**17.** Procédé selon la revendication 1 caractérisé en ce que la liqueur d'aluminate de sodium sursaturée après filtration et avant décomposition a un Rp compris entre 1,13 et 1,23 et une concentration en soude caustique comprise entre 150 et 160 g $Na_2O$/litre.

**Patentansprüche**

**1.** Verfahren zur Entfernung von Eisen aus übersättigten Natriumaluminatlaugen, die aus dem alkalischen Aufschluß nach dem Bayer-Verfahren von Tonerdemonohydrat enthaltendem Bauxit stammen, mit folgenden aufeinanderfolgenden Schritten : Mahlung, eventuell Entkieselung in Anwesenheit eines aliquoten Teils zersetzter Lauge, dann Aufschluß des gemahlenen und eventuell mit der Restfraktion der zersetzten Lauge entkieselten Bauxits bei einer Temperatur oberhalb 200°C, gewöhnlich 240 bis 270°C, um das Tonerdehydrat löslich zu machen und nach dem Aufschluß eine Suspension des unlöslichen Rückstands oder Rotschlamms in übersättigter Natriumaluminatlauge zu bilden, die nach Abkühlung und Verdünnung dekantiert wird, um den Schlamm oder unlöslichen Rückstand von der übersättigten Lauge, die nach erfolgter Filtration in Anwesenheit eines Initiators zersetzt wird, zu trennen, dadurch gekennzeichnet, daß nach dem Aufschluß während der Abkühlung der Suspension durch progressiven Druckabfall in den Reaktoren eine kleine Menge einer kalziumhaltigen Verbindung bei einer Temperatur oberhalb 140°C in die Suspension eingespritzt wird.

**2.** Verfahren nach Anspruch 1, dadurch gekennzeichnet, daß die Einspritztemperatur der kalziumhaltigen Verbindung 170°C bis 220°C beträgt.

**3.** Verfahren nach Anspruch 1 oder 2, dadurch gekennzeichnet, daß die kalziumhaltige Verbindung Kalk ist.

**4.** Verfahren nach Anspruch 1 oder 2, dadurch gekennzeichnet, daß die kalziumhaltige Verbindung ein Kalziumsalz ist, z.B. Kalziumkarbonat oder Kalziumsulfat.

**5.** Verfahren nach Anspruch 1 oder 2, dadurch gekennzeichnet, daß die kalziumhaltige Verbindung durch Löschung von Kalk in einer alkalischen Aluminatlauge wie Hexahydrat-Kalziumaluminat (dreifach) gebildet wird.

**6.** Verfahren nach einem der Ansprüche 1 bis 5, dadurch gekennzeichnet, daß die kleinen Mengen der kalziumhaltigen Verbindung, die in die Suspension eingespritzt werden, im Bereich von 0,5 bis 3% und vorzugsweise 1 bis 2 Gew.-% CaO, bezogen auf das Trockenbauxitgewicht, liegen.

**7.** Verfahren nach Anspruch 1, dadurch gekennzeichnet, daß der Aufschluß des Bauxits in Anwesenheit einer kleinen Fraktion des zu Beginn des Verfahrens abgesetzten und rückgeführten Schlamms erfolgt.

**8.** Verfahren nach Anspruch 7, dadurch gekennzeichnet, daß die kleine Fraktion des zu Beginn des Verfahrens abgesetzten und rückgeführten Schlamms, die durch das Gewichtsverhältnis Trockenschlamm zu Trockenbauxit gemessen wird, mindestens 5% und vorzugsweise 10 bis 18% beträgt.

**9.** Verfahren nach Anspruch 1, dadurch gekennzeichnet, daß vor dem Aufschluß und vorzugsweise beim Mahlen eine kleine Menge Kalk in den Bauxit eingebracht wird.

**10.** Verfahren nach Anspruch 9, dadurch gekennzeichnet, daß die kleine Menge Kalk, die vor dem Aufschluß in den Bauxit eingebracht wird, im Bereich von 1 bis 2 Gew.-% CaO, bezogen auf das Trockenbauxitgewicht, liegt.

**11.** Verfahren nach einem der Ansprüche 1 bis 5, dadurch gekennzeichnet, daß die Verweilzeit der kalziumhaltigen Verbindung, die bei 170° bis 220°C in die Suspension eingespritzt wird, mindestens 15 Minuten und vorzugsweise 20 bis 40 Minuten beträgt.

12. Verfahren nach einem der Ansprüche 1 bis 6, dadurch gekennzeichnet, daß die kalkbasische Verbindung in Form von Kalkmilch eingespritzt wird, welche 80 bis 120 g CaO/Liter enthält und von welcher mindestens 30 Gew.-% Schwebeteilchen größer als 20 μm sind.

13. Verfahren nach Anspruch 12, dadurch gekennzeichnet, daß die Kalkmilch durch Löschung von Rohkalk entsteht, der in Aufschlußlauge bei 60 bis 70°C auf 2 mm ausgesiebt wird.

14. Verfahren nach einem der Ansprüche 7 oder 8, dadurch gekennzeichnet, daß die Verweilzeit der kalziumhaltigen Verbindung, die in die Suspension eingespritzt wird, 10 Minuten nicht überschreitet und in der Regel 3 bis 6 Minuten beträgt.

15. Verfahren nach Anspruch 1, dadurch gekennzeichnet, daß die zersetzte Natriumaluminatlauge ein Rp von 0,57 bis 0,65 und eine Natronlaugenkonzentration von 150 bis 160 g $Na_2O$/Liter hat.

16. Verfahren nach Anspruch 1, dadurch gekennzeichnet, daß die Aufschlußlauge nach erfolgter Konzentrierung durch Verdampfung der zersetzten Natriumaluminatlauge ein Rp von 0,57 bis 0,65 und eine Natronlaugenkonzentration von 195 bis 215 g $Na_2O$/Liter hat.

17. Verfahren nach Anspruch 1, dadurch gekennzeichnet, daß die übersättigte Natriumaluminatlauge nach erfolgter Filtration und vor der Zersetzung ein Rp von 1,13 bis 1,23 und eine Natronlaugenkonzentration von 150 bis 160 g $Na_2O$/Liter hat.

## Claims

1. A process for eliminating iron from the supersaturated sodium aluminate solutions obtained from the alkaline digestion of the monohydrate bauxite according to the Bayer process successively including the steps of grinding and eventually of desilicatation in the presence of an aliquot of spent liquor, then digestion at a temperature higher than 200°C, usually between 240 and 270°C, of the said ground bauxite, which is eventually desilicatated by the remaining fraction of the spent liquor, in order to make the alumina hydrate soluble and form at the end of the digestion an insoluble suspension of the residue or red mud in the supersaturated sodium aluminate liquor which, after cooling and dilution, is decanted to separate the mud or insoluble residues from the supersaturated liquor destined to be decomposed in the presence of seeds after filtration, characterised by the fact that, at the end of the digestion, during the cooling of the suspension achieved by decreasing the pressure in the reactors, a small quantity of a mixture containing calcium is injected into the said suspension at a temperature higher than 140°C.

2. Process according to Claim 1, characterised by the fact that the injection temperature of the calcium-containing compound is between 170°C and 220°C.

3. Process according to Claim 1 or 2, characterised by the fact that the calcium-containing compound is lime.

4. Process according to Claim 1 or 2, characterised by the fact that the calcium-containing compound is a calcium salt such as calcium carbonate or calcium sulphate.

5. Process according to Claim 1 or 2, characterised by the fact that the calcium-containing compound is, like hexahydrated tricalcic aluminate, formed by slackening lime in an alkaline aluminate liquor.

6. Process according to any one of Claims 1 to 5, characterised by the fact that the small quantities of the calcium-containing compound injected in the suspension are between 0.5 and 3% and preferably between 1 and 2 % in weight CaO compared to the dry bauxite weight.

7. Process according to Claim 1, characterised by the fact that the bauxite digestion is done in the presence of a small fraction of the settled mud recycled at the beginning of the process.

8. Process according to Claim 7, characterised by the fact that the small fraction of decanted mud recycled at the beginning of the process measured by the weight ratio of the dry mud to the dry bauxite is at least 5% and preferably between 10 and 18 %.

9.  Process according to Claim 1, characterised by the fact that a small quantity of lime is introduced into the bauxite before the digestion and preferably during the grinding step.

10. Process according to Claim 9, characterised by the fact that the small quantity of lime introduced into the bauxite before the digestion is between 1 and 2% of CaO weight compared to the dry bauxite weight.

11. Process according to any one of Claims 1 to 5, characterised by the fact that the time that the calcium-containing compound spends at least 15 minutes and preferably 20 to 40 minutes in the suspension at a temperature between 170°C and 220°C.

12. Process according to any one of Claims 1 to 6, characterised by the fact that the lime based compound is injected as lime wash containing 80 to 120 g CaO / litre and in which at least 30% in weight of the particles have a size larger than 20 micrometers.

13. Process according to Claim 12, characterised by the fact that the lime wash is obtained by slackening of the quick lime sifted to 2 mm in the green liquor between 60 and 70°C.

14. Process according to Claim 7 or 8, characterised by the fact that the time spent by the calcium-containing compound in the suspension does not exceed 10 minutes and is generally between 3 and 6 minutes.

15. Process according to Claim 1, characterised by the fact that the sodium aluminate spent liquor has an $R_P$ between 0.57 and 0.65 and a sodium hydroxide concentration between 150 and 160 g $Na_2O$ / litre.

16. Process according to Claim 1, characterised by the fact that the green liquor after concentration by evaporation of the sodium aluminate spent liquor, has an $R_P$ between 0.57 and 0.65 and a sodium hydroxide concentration between 195 and 215 g $Na_2O$ / litre.

17. Process according to Claim 1, characterised by the fact that the supersaturated sodium aluminate liquor after filtration and before decomposition has a $R_P$ between 1.13 and 1.23 and a sodium hydroxide concentration between 150 and 160 g $Na_2O$ / litre.

FIG. 1